# EUROPÄISCHE PATENTANMELDUNG

(11) **EP 4 834 716 A1**
(43) Veröffentlichungstag der Anmeldung: **04.11.2026**
(21) Anmeldenummer: 26166711.7
(22) Anmeldetag: 23.03.2026
(51) Int. Cl.: B62D 11/00, B62D 6/00, E01H 4/02, B62D 1/12, B62D 5/00

(54) **PISTENPFLEGEFAHRZEUG**

(30) Priorität: 28.04.2025 DE 102025116248
(71) Anmelder: Kässbohrer Geländefahrzeug AG, 88471 Laupheim (DE)
(72) Erfinder: Henger, Claudius, 72535 Heroldstatt (DE); Behmüller, Andreas, 89171 Illerkirchberg (DE); Hartmann, Daniel, 89168 Niederstotzingen (DE)
(74) Vertreter: Patentanwälte Ruff, Wilhelm, Beier, Dauster & Partner mbB

(57) **Zusammenfassung**

Die Erfindung betrifft ein Pistenpflegefahrzeug zum Pflegen einer Schneepiste, aufweisend ein Antriebssystem mit einem Kettenfahrwerk, das zum Erzeugen einer Fahrbewegung eingerichtet ist, eine Fahrerkabine mit einer Benutzerschnittstelle, die wenigstens ein Lenkelement zum manuellen Lenken der Fahrbewegung durch einen Fahrer aufweist, wobei das Lenkelement zwischen unterschiedlichen Lenkstellungen manuell beweglich ist, die unterschiedliche Lenkwinkel der Fahrbewegung erzeugen, ein Fahrerassistenzsystem, das mit dem Antriebssystem verbunden und zum automatischen Steuern der Fahrbewegung entlang einer vorgegebenen Fahrspur eingerichtet ist, eine Sensoreinrichtung, die zum Erfassen eines Lenkwinkels der automatisch gesteuerten Fahrbewegung eingerichtet ist, und eine Stelleinrichtung, die mit dem Lenkelement wirkverbunden und dazu eingerichtet ist, in Abhängigkeit des mittels der Sensoreinrichtung erfassten Lenkwinkels der mittels des Fahrerassistenzsystems automatisch gesteuerten Fahrbewegung eine Bewegung des Lenkelements in eine Lenkstellung der unterschiedlichen Lenkstellungen zu erzeugen, die dem erfassten Lenkwinkel der automatisch gesteuerten Fahrbewegung entspricht.

## Beschreibung

Die Erfindung betrifft ein Pistenpflegefahrzeug.

Pistenpflegefahrzeuge sind zivile Kettenfahrzeuge, die zur Pflege von Schneepisten für Wintersportzwecke eingerichtet sind und auch als Pistenraupen bezeichnet werden (englisch: snow groomer).

Der grundsätzlich übliche Aufbau solcher Fahrzeuge weist einen längserstreckten Tragrahmen, ein Antriebssystem mit einem Kettenfahrwerk, eine frontseitig angeordnete Fahrerkabine und eine in der Fahrerkabine angeordnete Benutzerschnittstelle auf. Die Benutzerschnittstelle weist Bedienelemente zur manuellen Steuerung der Fahrzeugfunktionen und der Funktionen etwaiger Anbaugeräte durch den Fahrer auf. Zum Lenken des Fahrzeugs ist ein Bedienelement in Form eines Lenkelements vorhanden, beispielsweise ein Lenkrad. Das Lenkelement ist auf allgemein bekannte Weise manuell zwischen unterschiedlichen Lenkstellungen beweglich, um den Lenkwinkel der Fahrbewegung des Pistenpflegefahrzeugs zu ändern, mit anderen Worten: um das Pistenpflegefahrzeug zu lenken.

In der gegenwärtigen Praxis werden Pistenpflegefahrzeuge nach wie vor überwiegend rein manuell von einem betreffenden Fahrer gelenkt.

Gleichwohl ist aus der DE 10 2022 205 371 A1 ein Pistenpflegefahrzeug mit einem Fahrerassistenzsystem bekannt, das zum automatischen Steuern der Fahrbewegung entlang einer vorgegebenen Fahrspur eingerichtet ist.

Aufgabe der Erfindung ist es, ein Pistenpflegefahrzeug bereitzustellen, das einen verbesserten assistierten Fahrbetrieb ermöglicht. Im Speziellen soll die Fahrsicherheit bei Nutzung des Fahrerassistenzsystems verbessert werden.

Diese Aufgabe wird durch das Bereitstellen eines Pistenpflegefahrzeugs mit den Merkmalen des Anspruchs 1 gelöst. Vorteilhafte Weiterbildungen sind in den Unteransprüchen angegeben. Der Wortlaut der Ansprüche wird durch Bezugnahme zum Gegenstand der Beschreibung gemacht.

Das erfindungsgemäße Pistenpflegefahrzeug weist ein Antriebssystem mit einem Kettenfahrwerk, eine Fahrerkabine mit einer Benutzerschnittstelle, ein Fahrerassistenzsystem, eine Sensoreinrichtung und eine Stelleinrichtung auf. Das Antriebssystem mit dem Kettenfahrwerk ist auf übliche Weise zum Erzeugen einer Fahrbewegung des Pistenpflegefahrzeugs eingerichtet. Die Benutzerschnittstelle weist wenigstens ein Lenkelement zum manuellen Lenken der Fahrbewegung durch einen Fahrer auf. Dabei ist das Lenkelement zwischen unterschiedlichen Lenkstellungen manuell beweglich, wobei die unterschiedlichen Lenkstellungen unterschiedliche Lenkwinkel der Fahrbewegung erzeugen. Das Fahrerassistenzsystem ist mit dem Antriebssystem verbunden und zum automatischen Steuern der Fahrbewegung entlang einer vorgegebenen Fahrspur eingerichtet. Die Sensoreinrichtung ist zum Erfassen eines Lenkwinkels der automatisch gesteuerten Fahrbewegung eingerichtet. Die Stelleinrichtung ist mit dem Lenkelement wirkverbunden und dazu eingerichtet, in Abhängigkeit des mittels der Sensoreinrichtung erfassten Lenkwinkels der automatisch gesteuerten Fahrbewegung eine Bewegung des Lenkelements in eine Lenkstellung der unterschiedlichen Lenkstellungen zu erzeugen, die dem erfassten Lenkwinkel der automatisch gesteuerten Fahrbewegung entspricht.

Durch die Erfindung wird das bewegliche Lenkelement der automatisch gesteuerten Fahrbewegung nachgeführt. Mit anderen Worten: Gibt das Fahrerassistenzsystem einen Steuerbefehl zum Fahren einer Kurve mit einem gewissen Lenkwinkel der Fahrbewegung vor, wird das Lenkelement mittels der Stelleinrichtung entsprechend bewegt. Durch die automatisierte Nachführung nimmt das Lenkelement immer diejenige Lenkstellung ein, die dem mittels des Fahrerassistenzsystems vorgegebenen Lenkwinkel der Fahrbewegung entspricht. Hierdurch erhält der Fahrer stets eine unmittelbare Rückmeldung über den automatisch gesteuerten Lenkwinkel. Sofern der Fahrer bei aktiviertem Fahrerassistenzsystem korrigierend eingreifen muss oder möchte, dient die nachgeführte Lenkstellung als Referenz für korrigierende Lenkeingriffe. Hierdurch wird die Fahrsicherheit im assistierten Fahrbetrieb verbessert. Dabei haben die Erfinder erkannt, dass eine fehlende Referenz zu nicht ausreichenden oder übermäßigen Lenkeingriffen durch den Fahrer führen kann. Diese Probleme werden mit der vorliegenden Erfindung ausgeräumt.

Das Fahrerassistenzsystem kann grundsätzlich auf jede für den vorliegenden Zweck geeignete Weise gestaltet sein, beispielsweise wie in der DE 10 2022 205 371 A1 beschrieben. Das Fahrerassistenzsystem erlaubt eine automatische Steuerung der Fahrbewegung, insbesondere ein automatisiertes Lenken entlang einer vorgegebenen Fahrspur. Die Fahrspur kann beispielsweise als GPS-Track vorgegeben sein. Das Fahrerassistenzsystem kann zur Verarbeitung unterschiedlicher Eingangsgrößen eingerichtet sein, um in deren Abhängigkeit die Fahrbewegung automatisch zu Steuern. Als Eingangsgrößen kommen beispielsweise GPS-Signale, Bewegungsgrößen (Position, Orientierung, Geschwindigkeit, Winkelgeschwindigkeit, Beschleunigung und/oder Winkelbeschleunigung jeweils in Bezug auf eine, zwei oder drei Raumachsen) des Pistenpflegefahrzeugs, Seilgeschwindigkeit und/oder Seilwinkel einer Seilwindeneinrichtung des Pistenpflegefahrzeugs, Bewegungsgrößen des Kettenfahrwerks und/oder Umgebungsdaten in Frage. Das Fahrerassistenzsystem kann auch als Lenkassistent oder Spurführungsassistent bezeichnet werden. Details der technischen Umsetzung des Fahrerassistenzsystems sind für die vorliegende Erfindung nicht wesentlich und bedürfen daher keiner weiteren Erläuterung. Es versteht sich, dass das Fahrerassistenzsystem aktivierbar und deaktivierbar ist. In aktiviertem Zustand erfolgt die Steuerung mittels des Fahrerassistenzsystems und der Fahrer kann sich auf ein Überwachen der Steuerung und etwaige korrigierende Lenkeingriffe beschränken. Im deaktivierten Zustand erfolgt die Steuerung des Pistenpflegefahrzeugs, im Speziellen das Lenken der Fahrbewegung, manuell durch den Fahrer. Zudem kann das Fahrerassistenzsystem bei Bedarf manuell durch den Benutzer übersteuert und damit deaktiviert werden.

Die Sensoreinrichtung dient dem Erfassen des Lenkwinkels der automatisch gesteuerten Fahrbewegung. Dieser Lenkwinkel kann auch als Ist-Lenkwinkel bezeichnet werden. Der Lenkwinkel der automatisch gesteuerten Fahrbewegung kann auf unterschiedliche Weise und basierend auf unterschiedlichen Messprinzipien erfasst werden.

Die Stelleinrichtung dient der Bewegung des Lenkelements in Abhängigkeit des mittels der Sensoreinrichtung erfassten Lenkwinkels der automatisch gesteuerten Fahrbewegung. Mit anderen Worten: Die Stelleinrichtung führt das Lenkelement entsprechend nach. Die Stelleinrichtung kann auf jede für diesen Zweck geeignete Weise ausgeführt sein.

In Ausgestaltung der Erfindung weist das Lenkelement einen Steuerhebel, eine Doppelhebelanordnung, ein Lenkrad und/oder einen Joystick auf. Der Steuerhebel, die Doppelhebelanordnung, das Lenkrad und/oder der Joystick sind zum Lenken der Fahrbewegung manuell zwischen den unterschiedlichen Lenkstellungen manuell beweglich. Diese Beweglichkeit kann je nach spezifischer Gestaltung des Lenkelements translatorisch und/oder rotatorisch sein. Im manuellen Fahrbetrieb wird das betreffende Lenkelement manuell durch den Fahrer bewegt. Im automatisierten oder auch assistierten Fahrbetrieb erfolgt die Bewegung des Lenkelements mittels der Stelleinrichtung und entsprechend dem automatisch gesteuerten Lenkwinkel.

In weiterer Ausgestaltung der Erfindung weist die Stelleinrichtung einen Translationsaktor auf, der zum Erzeugen der Bewegung des Lenkelements eingerichtet ist. Bei dieser Ausgestaltung ist die Bewegung vorzugsweise translatorisch. Denkbar und möglich ist jedoch auch, dass der Translationsaktor eine rotatorische Bewegung des Lenkelements erzeugt, beispielsweise indem die translatorische Bewegung des Translationsaktors in eine rotatorische Bewegung des Lenkelements umgeformt wird. Die Umformung kann mit einem hierfür eingerichteten Getriebe erfolgen. Der Translationsaktor ist bei einer Ausgestaltung ein elektrischer Aktor. Bei weiteren Ausgestaltungen ist der Translationsaktor ein pneumatischer Aktor oder ein hydraulischer Aktor.

In weiterer Ausgestaltung der Erfindung weist die Stelleinrichtung einen Rotationsaktor auf, der zum Erzeugen der Bewegung des Lenkelements eingerichtet ist. Vorzugsweise ist die mittels des Rotationsaktors erzeugte Bewegung eine rotatorische Stellbewegung. Es ist aber auch denkbar und möglich, dass mittels des Rotationsaktors eine translatorische Bewegung erzeugt wird. Zu diesem Zweck kann die rotatorische Bewegung mittels eines entsprechend eingerichteten Umformgetriebes in eine translatorische Bewegung des Lenkelements umgeformt werden. Bei einer Ausgestaltung ist der Rotationsaktor ein elektrischer Aktor. Bei einer weiteren Ausgestaltung ist der Rotationsaktor ein pneumatischer Aktor oder ein hydraulischer Aktor.

In weiterer Ausgestaltung der Erfindung weist das Kettenfahrwerk eine linke Kette und eine rechte Kette auf, wobei die Sensoreinrichtung zum Erfassen wenigstens einer ersten Messgröße betreffend die linke Kette und einer zweiten Messgröße betreffend die rechte Kette eingerichtet ist, und wobei der Lenkwinkel der automatisch gesteuerten Fahrbewegung mittelbar über einen Vergleich der ersten Messgröße und der zweiten Messgröße erfasst wird. Bei dieser Ausgestaltung erfolgt das Erfassen des automatisch gesteuerten Fahrwinkels mittelbar. Für die mittelbare Erfassung wird die der linken Kette zugeordnete erste Messgröße mit der der rechten Kette zugeordneten zweiten Messgröße verglichen und/oder umgekehrt. Durch diesen Vergleich kann auf eine Geschwindigkeitsdifferenz zwischen der linken Kette und der rechten Kette geschlossen werden, was letztlich eine Ermittlung des besagten Lenkwinkels erlaubt. Die erste Messgröße und die zweite Messgröße sind bei unterschiedlichen Ausgestaltungen unterschiedliche physikalische Größen. Dementsprechend ist die Sensoreinrichtung bei diesen unterschiedlichen Ausgestaltungen zum Erfassen unterschiedlicher physikalischer Größen eingerichtet.

In weiterer Ausgestaltung der Erfindung sind die erste Messgröße und die zweite Messgröße Drehzahlen, wobei die Sensoreinrichtung wenigstens einen ersten Drehzahlsensor, welcher der linken Kette zugeordnet ist, und einen zweiten Drehzahlsensor aufweist, welcher der rechten Kette zugeordnet ist. Bei dieser Ausgestaltung der Erfindung erfolgt die mittelbare Erfassung des automatisch gesteuerten Lenkwinkels über einen Vergleich der den Ketten zugeordneten Drehzahlen. Die Drehzahlen können an unterschiedlichen Stellen und/oder Bauteilen des Antriebssystems abgegriffen werden. Dementsprechend können der erste Drehzahlsensor und der zweite Drehzahlsensor an unterschiedlichen Stellen angeordnet sein. Beispielsweise sind die Drehzahlsensoren bei einer Ausgestaltung an Laufrädern der linken Kette und der rechten Kette angeordnet. Bei einer weiteren Ausgestaltung sind die Drehzahlsensoren an gesonderten Antriebsmotoren der linken Kette und der rechten Kette angeordnet. Ist die mittels des ersten Drehzahlsensors erfasste Drehzahl betreffend die linke Kette größer als die zweite Drehzahl betreffend die rechte Kette, beschreibt der automatisch gesteuerte Lenkwinkel eine Rechtskurve. Entsprechendes gilt umgekehrt.

In weiterer Ausgestaltung der Erfindung sind die erste Messgröße und die zweite Messgröße Hydraulikdrücke, wobei die Sensoreinrichtung wenigstens einen ersten Drucksensor, welcher der linken Kette zugeordnet ist, und einen zweiten Drucksensor aufweist, welcher der rechten Kette zugeordnet ist. Bei dieser Ausgestaltung der Erfindung ist das Antriebssystem ein hydraulisches Antriebssystem. Zur eigentlichen Energieerzeugung kann ein Verbrennungsmotor vorhanden sein. Alternativ wird die Energie über eine elektrische Fahrbatterie bereitgestellt. Dabei werden die linke Kette und die rechte Kette bei dieser Ausgestaltung der Erfindung mittels jeweils eines Hydraulikmotors angetrieben. Die Hydraulikdrücke sind an den betreffenden Hydraulikmotoren anliegende hydraulische Drücke. Ist der mittels des ersten Drucksensors erfasste Hydraulikdruck größer als der mittels des zweiten Drucksensors erfasste Hydraulikdruck, gibt das Fahrerassistenzsystem einen Lenkwinkel zum Beschreiben einer Rechtskurve vor. Entsprechendes gilt umgekehrt.

In weiterer Ausgestaltung der Erfindung sind die erste Messgröße und die zweite Messgröße elektrische Ströme und/oder Spannungen, und die Sensoreinrichtung weist wenigstens einen ersten Strom- und/oder Spannungssensor, welcher der linken Kette zugeordnet ist, und einen zweiten Strom- und/oder Spannungssensor auf, welcher der rechten Kette zugeordnet ist. Bei dieser Ausgestaltung der Erfindung erfolgt der Antrieb der linken Kette und der rechten Kette vorzugsweise mittels jeweils eines Elektromotors. Das Antriebssystem ist ein elektrisches Antriebssystem. Die eigentliche Antriebsenergie kann auch bei dieser Ausgestaltung mittels eines Verbrennungsmotors und/oder einer elektrischen Fahrbatterie bereitgestellt werden. Ist der Strom und/oder die Spannung betreffend die linke Kette größer als der Strom und/oder die Spannung betreffend die rechte Kette, gibt das Fahrerassistenzsystem einen Lenkwinkel vor, der eine Rechtskurve beschreibt. Entsprechendes gilt umgekehrt.

In weiterer Ausgestaltung der Erfindung weist die Sensoreinrichtung zum Erfassen des Lenkwinkels der automatisch gesteuerten Fahrbewegung Beschleunigungssensoren auf, die zum Erfassen von Beschleunigungen des Pistenpflegefahrzeugs eingerichtet sind. Die Beschleunigungssensoren sind an unterschiedlichen Positionen des Pistenpflegefahrzeugs angeordnet. Sind diese Positionen bekannt, insbesondere deren Abstände zu einem festen Bezugspunkt, kann auf Grundlage der gemessenen Beschleunigungen auf den Lenkwinkel geschlossen werden. Dies auf Grundlage grundsätzlich bekannter mathematisch-physikalischer Beziehungen. Im Speziellen sind die Beschleunigungssensoren zum Erfassen einer Winkelbeschleunigung um eine Hochachse des Pistenpflegefahrzeugs eingerichtet.

In weiterer Ausgestaltung der Erfindung ist die Sensoreinrichtung zum Erfassen von GPS-Signalen eingerichtet. Der Lenkwinkel kann in Abhängigkeit der erfassten GPS-Signale ermittelt werden.

Weitere Vorteile und Merkmale der Erfindung ergeben sich aus den Ansprüchen und aus der nachfolgenden Beschreibung bevorzugter Ausführungsbeispiele der Erfindung, die anhand der Zeichnungen dargestellt sind.

Es zeigen:
- Fig. 1: in schematischer Seitenansicht eine Ausführungsform eines erfindungsgemäßen Pistenpflegefahrzeugs,
- Fig. 2: das Pistenpflegefahrzeug nach Fig. 1 in einer schematischen Aufsicht in vereinfachter Blockdarstellung, wobei in Fig. 2 eine manuelle Steuerung des Lenkwinkels verdeutlicht ist,
- Fig. 3: das Pistenpflegefahrzeug in einer der Fig. 2 entsprechenden Darstellungsweise, wobei in Fig. 3 eine automatisierte Steuerung des Lenkwinkels verdeutlicht ist,
- Fig. 4, 5: das Pistenpflegefahrzeug nach Fig. 1 in einer den Fig. 2 und 3 entsprechenden Darstellungsweise, wobei in Fig. 4 eine automatisierte Steuerung des Lenkwinkels zum Beschreiben einer Linkskurve und in Fig. 5 zum Beschreiben einer Rechtskurve gezeigt ist,
- Fig. 6: eine weitere schematische Blockdarstellung zur Verdeutlichung weiterer Merkmale des Pistenpflegefahrzeugs nach Fig. 1,
- Fig. 7, 8: schematische Perspektivansichten möglicher Ausgestaltungen einer Benutzerschnittstelle des Pistenpflegefahrzeugs nach Fig. 1 mit einem Steuerhebel (Fig. 7) und einer Doppelhebelanordnung (Fig. 8), und
- Fig. 9: das Pistenpflegefahrzeug nach Fig. 1 in einer den Fig. 1 bis 5 entsprechenden Darstellungsweise, wobei in Fig. 9 weitere Merkmale und mögliche Ausgestaltungen einer Sensoreinrichtung des Pistenpflegefahrzeugs verdeutlicht sind.

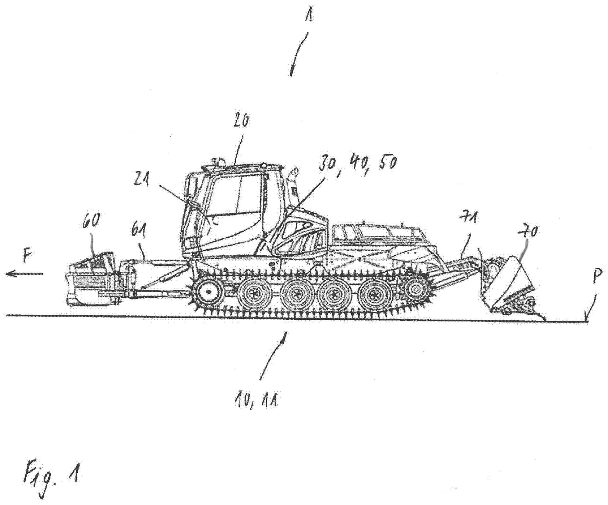

Gemäß Fig. 1 ist ein Pistenpflegefahrzeug 1 zum Pflegen einer Schneepiste P vorgesehen. Das Pistenpflegefahrzeug 1 kann auch als Pistenraupe bezeichnet werden (englisch: snow groomer).

Das Pistenpflegefahrzeug 1 weist ein Antriebssystem 10, eine Fahrerkabine 20, ein Fahrerassistenzsystem 30, eine Sensoreinrichtung 40 und eine Stelleinrichtung 50 auf.

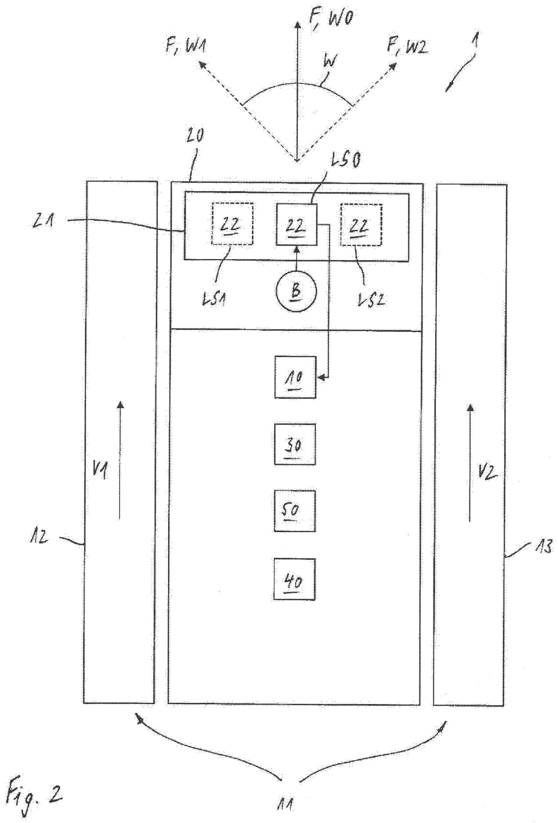

In Fig. 1 sind das Fahrerassistenzsystem 30, die Sensoreinrichtung 40 und die Stelleinrichtung 50 nicht im Detail ersichtlich. Weitere Details werden nachfolgend noch unter Bezugnahme auf die weiteren Fig. 2 bis 9 erläutert.

Das Antriebssystem 10 weist ein Kettenfahrwerk 11 auf, das bei der gezeigten Ausführungsform zwei Ketten 12, 13 aufweist. Diese können auch als linke Kette 12 und rechte Kette 13 bezeichnet werden. Das Antriebssystem 10 mit dem Kettenfahrwerk 11 ist auf eine der Fachperson bekannte Weise zum Erzeugen einer Fahrbewegung F über die Schneepiste P eingerichtet.

Die Fahrerkabine 20 weist eine Benutzerschnittstelle 21 auf. Die Benutzerschnittstelle 21 dient der manuellen Steuerung der Funktionen des Pistenpflegefahrzeugs 1, im Speziellen der Steuerung der Fahrbewegung F, durch einen Fahrer F. Sofern Anbaugeräte vorhanden sind, können auch deren Funktionen über die Benutzerschnittstelle 21 manuell gesteuert werden.

Bei der gezeigten Ausführungsform weist das Pistenpflegefahrzeug 1 Anbaugeräte auf, nämlich ein frontseitig angeordnetes Räumschild 60 und eine heckseitig angeordnete Heckfräse 70. Das Räumschild 60 und die Heckfräse 70 sind jeweils optional. Das Räumschild 70 und die Heckfräse 70 sind auf eine der Fachperson bekannte Weise mittels entsprechender Stellzylinderanordnungen 61, 71 stellbeweglich an dem Pistenpflegefahrzeug 1 angebracht.

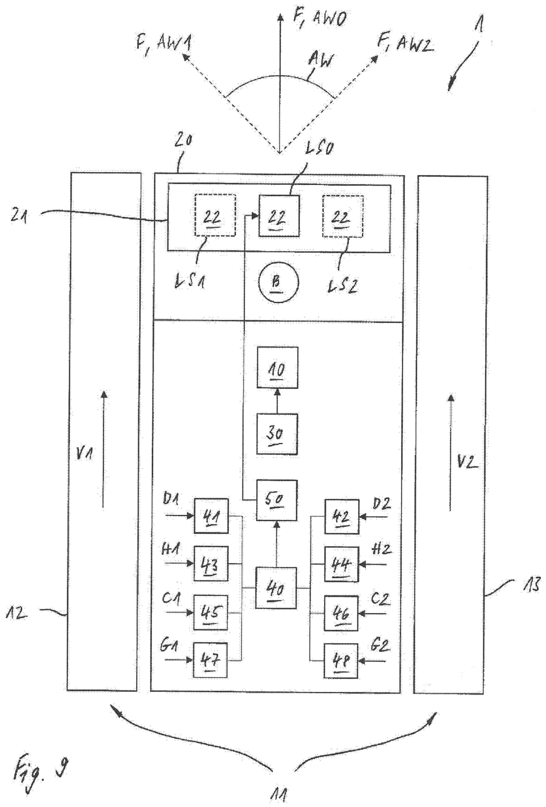

Die Benutzerschnittstelle 21 weist wenigstens ein Lenkelement 22 auf (siehe insbesondere Fig. 2 bis 9), das zum Lenken der Fahrbewegung F durch den Fahrer B eingerichtet ist. Der Fahrer B ist schematisch in den Fig. 2 bis 6 sowie in der Fig. 9 eingezeichnet. Das Lenkelement 22 ist zwischen unterschiedlichen Lenkstellungen manuell beweglich. Je nach Lenkstellung des Lenkelements 22 ergibt sich ein unterschiedlicher Lenkwinkel der Fahrbewegung F.

In Fig. 2 ist schematisch vereinfacht eine manuelle Steuerung der Fahrbewegung F gezeigt, d. h. ein manuelles Lenken durch den Fahrer B.

In Fig. 2 schematisch vereinfacht und exemplarisch dargestellt sind drei unterschiedliche Lenkstellungen LS0, LS1, LS2, die auch als Null-Lenkstellung LS0, Links-Lenkstellung LS1 und Rechts-Lenkstellung LS2 bezeichnet werden können. Es versteht sich, dass diese Darstellung schematisch stark vereinfacht ist. Weiter versteht sich, dass das Lenkelement 22 stufenlos zwischen den unterschiedlichen Lenkstellungen beweglich ist. Dabei können vorliegend die Links-Lenkstellung LS1 und die Rechts-Lenkstellung LS2 als Endlagen des Lenkelements 22 aufgefasst werden.

Das Lenkelement 22 ist mit dem Antriebssystem 10 wirkverbunden, was in Fig. 2 durch den dort zwischen dem Lenkelement 22 und dem Antriebssystem 10 erstreckten Pfeil verdeutlicht wird. Nimmt das Lenkelement 22 die Links-Lenkstellung LS1 ein, wird das Antriebssystem 10 zum Beschreiben einer Linkskurve angesteuert. In der Rechts-Lenkstellung LS2 ergibt sich eine Rechtskurve. Dabei sind in Fig. 2 entsprechend unterschiedliche Lenkwinkel W der manuell gesteuerten Fahrbewegung F gezeigt. In der Null-Lenkstellung LS0 ergibt sich ein Lenkwinkel WO, in der Links-Lenkstellung LS1 ergibt sich ein Lenkwinkel W1 und in der Rechts-Lenkstellung LS2 ergibt sich ein Lenkwinkel W2. Die manuell gesteuerten Lenkwinkel WO, W1 und W2 der Fahrbewegung F können auch als Null-Lenkwinkel WO, Links-Lenkwinkel W1 und Rechts-Lenkwinkel W2 (der Fahrbewegung F) bezeichnet werden.

Das Fahrerassistenzsystem 30 ist mit dem Antriebssystem 10 verbunden und zum automatischen Steuern der Fahrbewegung F entlang einer vorgegebenen Fahrspur eingerichtet. Das Fahrerassistenzsystem 30 kann auf jede für diesen Zweck geeignete Weise gestaltet sein, beispielsweise wie in der DE 10 2022 205 371 A1 beschriebenen Art. Das Fahrerassistenzsystem 30 erlaubt bei Bedarf eine automatisierte Spurführung und dient der Entlastung des Fahrers B. Details der technischen Umsetzung des Fahrerassistenzsystems stehen nicht im Fokus der Erfindung und werden daher an dieser Stelle nicht näher erläutert.

In dem anhand Fig. 2 verdeutlichten Fahrzustand ist das Fahrerassistenzsystem 30 deaktiviert. Die Fahrbewegung F wird rein manuell durch den Fahrer B gesteuert, indem dieser das Lenkelement 22 in die besagten unterschiedlichen Lenkstellungen bewegt.

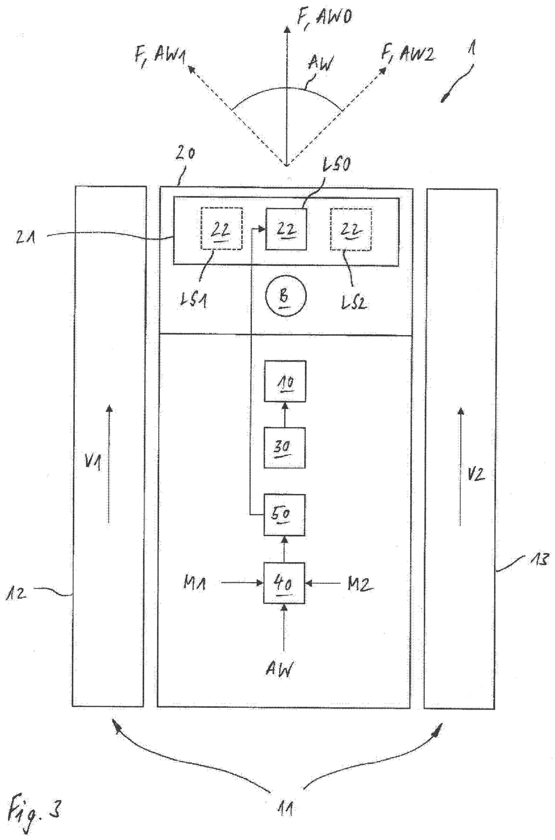

In dem anhand Fig. 3 verdeutlichten Fahrzustand ist das Fahrerassistenzsystem 30 aktiviert. Das Fahrerassistenzsystem 30 wirkt hierbei mittelbar oder unmittelbar auf das Antriebssystem 10, was in Fig. 3 durch den dort eingezeichneten zwischen dem Fahrerassistenzsystem 30 und dem Antriebssystem 10 erstreckten Pfeil verdeutlicht ist. Das Fahrerassistenzsystem 30 erlaubt eine automatisierte Steuerung der Fahrbewegung F unter Vorgabe unterschiedlicher Lenkwinkel. Die mittels des Fahrerassistenzsystems 30 vorgegebenen Lenkwinkel werden nachfolgend als automatisch gesteuerte Lenkwinkel bezeichnet und als automatischer Lenkwinkel AW abgekürzt. Es versteht sich, dass der automatische Lenkwinkel AW stufenlos gesteuert werden kann. Dabei sind in Fig. 3 rein exemplarisch automatische Lenkwinkel AW0, AW1 und AW2 dargestellt. Der exemplarisch gezeigte automatische Lenkwinkel AW0 entspricht numerisch vorliegend dem Null-Lenkwinkel WO. Der automatische Lenkwinkel AW1 entspricht numerisch dem Links-Lenkwinkel W1. Der automatische Lenkwinkel AW2 entspricht numerisch dem Rechts-Lenkwinkel W2.

Bei aktiviertem Fahrerassistenzsystem greift der Fahrer B allenfalls korrigierend an dem Lenkelement 22 an. Sofern keine Lenkkorrektur durch den Fahrer B erforderlich ist, kann das Lenkelement 22 unangetastet bleiben. Dies ist in Fig. 3 durch den - im Vergleich zu Fig. 2 - fehlenden Pfeil zwischen dem Fahrer B und dem Lenkelement 22 verdeutlicht.

Das Pistenpflegefahrzeug 1 sieht eine automatische nachgeführte Bewegung des Lenkelements 22 aktiviertem Fahrerassistenzsystem 30 vor. Die nachgeführte Bewegung des Lenkelements 22 erfolgt entsprechend dem automatisch gesteuerten Lenkwinkel AW. Zwecks Bewegung des Lenkelements 22 ist die Stelleinrichtung 50 vorgesehen.

Die Stelleinrichtung 50 ist mit dem Lenkelement 22 wirkverbunden und dazu eingerichtet, das Lenkelement 22 in eine dem automatisch gesteuerten Lenkwinkel AW entsprechende Lenkstellung zu bewegen. Hierdurch erhält der Fahrer B auch bei aktiviertem Fahrerassistenzsystem 30 stets eine Referenz für den vorgegebenen Lenkwinkel. Durch diese Referenz werden korrigierende Lenkeingriffe des Fahrers B maßgeblich vereinfacht, was zu einer Verbesserung der Fahrsicherheit bei aktiviertem Fahrerassistenzsystem 30 beiträgt.

Die Sensoreinrichtung 40 dient dem Erfassen des automatisch gesteuerten Lenkwinkels AW. Die Sensoreinrichtung 40 kann auf jede für diesen Zweck geeignete Weise gestaltet sein.

Bei der vorliegend gezeigten Ausführungsform erfolgt die Erfassung des automatisierten Lenkwinkels AW über einen Vergleich einer ersten Messgröße M1 und einer zweiten Messgröße M2. Beide Messgrößen M1, M2 werden mittels der Sensoreinrichtung 40 erfasst. Dabei ist die erste Messgröße M1 vorliegend einer linken Kette 12 des Kettenfahrwerks 11 zugeordnet. Die zweite Messgröße M2 ist einer rechten Kette 13 des Kettenfahrwerks 11 zugeordnet. Weitere mögliche Details und Ausgestaltungen einer solchen Vergleichs- oder auch Differenzmessung werden nachfolgend noch unter Bezugnahme auf Fig. 9 erläutert.

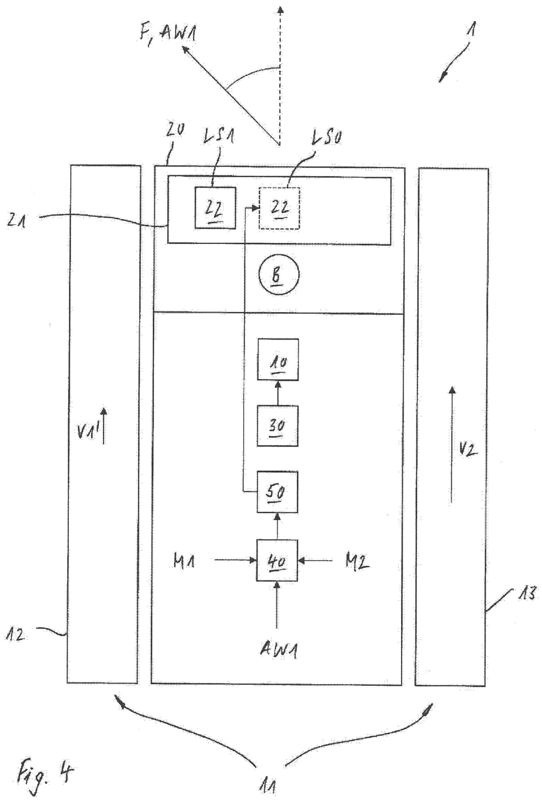

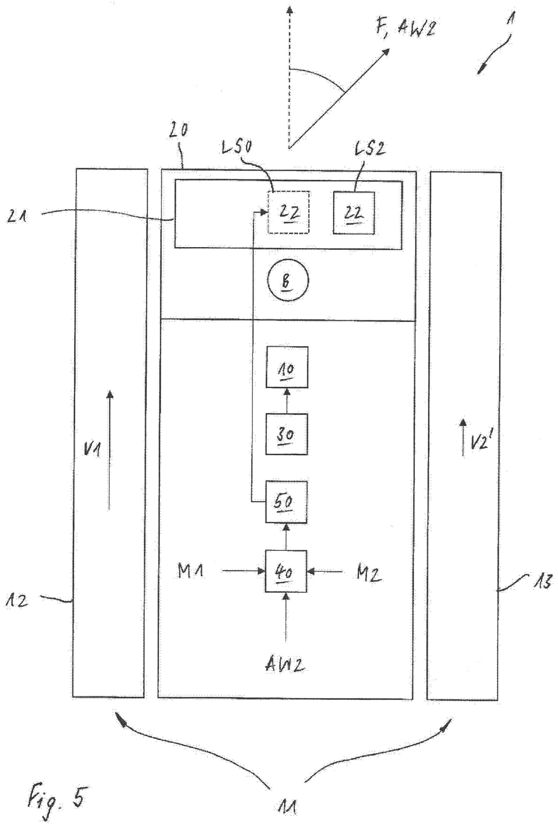

In den Fig. 4 und 5 sind zur noch weiteren Erläuterung der automatischen Lenkwinkelsteuerung zwei unterschiedliche Fahrzustände des Pistenpflegefahrzeugs 1 gezeigt. Fig. 4 zeigt einen Fahrzustand, in dem das Pistenpflegefahrzeug 1 eine Linkskurve fährt. In Fig. 5 wird eine Rechtskurve gefahren. In beiden Fällen ist das Fahrerassistenzsystem 30 aktiviert. Fährt das Pistenpflegefahrzeug 1 eine Linkskurve, wie in Fig. 4 gezeigt, wird der entsprechende automatische Lenkwinkel AW1 mittels der Sensoreinrichtung 40 erfasst. In Abhängigkeit des erfassten automatischen Lenkwinkels AW1 wird das Lenkelement 22 mittels der Stelleinrichtung 50 in eine entsprechende Lenkstellung bewegt. Die dem automatischen Lenkwinkel AW1 entsprechende Lenkstellung ist vorliegend die Links-Lenkstellung LS1.

Zum automatischen Steuern einer Rechtskurve, wie in Fig. 5 gezeigt, gibt das Fahrerassistenzsystem den automatischen Lenkwinkel AW2 vor. Das Lenkelement 22 wird dementsprechend in eine mit diesem automatischen Lenkwinkel AW korrespondierende Lenkstellung bewegt. Diese Lenkstellung ist bei der in Fig. 5 exemplarisch gezeigten Fahrsituation die Rechts-Lenkstellung LS2.

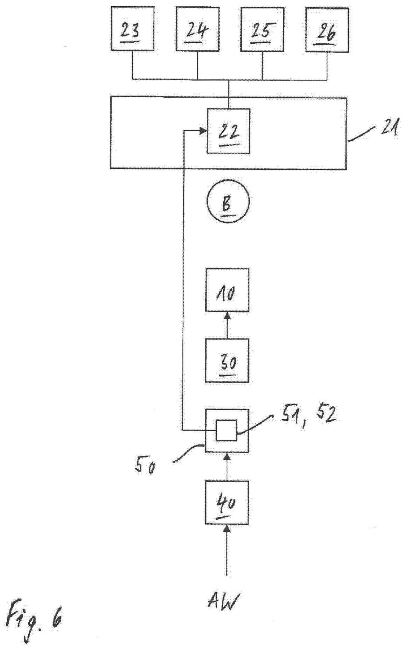

In Fig. 6 sind weitere Details betreffend das Lenkelement 22 und die Stelleinrichtung 50 schematisch gezeigt. Das Lenkelement 22 ist bei unterschiedlichen Ausgestaltungen unterschiedlich. Wie in Fig. 6 verdeutlicht, kann das Lenkelement 22 einen Steuerhebel 23, eine Doppelhebelanordnung 24, ein Lenkrad 25 und/oder einen Joystick 26 aufweisen. Der Steuerhebel 23, die Doppelhebelanordnung 24, das Lenkrad 25 und der Joystick 26 sind zum manuellen Lenken der Fahrbewegung F durch den Fahrer B zwischen den besagten unterschiedlichen Lenkstellungen beweglich. Diese Beweglichkeit kann jeweils translatorisch und/oder rotatorisch sein.

Zum Nachführen des Lenkelements 22 ist die Stelleinrichtung 50 bei unterschiedlichen Ausgestaltungen unterschiedlich. Bei einer Ausgestaltung weist die Stelleinrichtung 50 einen Translationsaktor 51 auf. Der Translationsaktor 51 ist zum Erzeugen der Stellbewegung des Lenkelements 22 eingerichtet.

Bei einer weiteren Ausgestaltung weist die Stelleinrichtung 50 einen Rotationsaktor 52 auf. Auch dieser ist zum Erzeugen der Stellbewegung 22 des Lenkelements 20 eingerichtet.

Es versteht sich, dass der Translationsaktor 51 und der Rotationsaktor 52 jeweils als elektrischer, pneumatischer und/oder hydraulischer Aktor ausgeführt sein können.

Je nachdem, auf welche Weise das Lenkelement 22 gestaltet ist, ergeben sich unterschiedliche Vorteile in Verbindung mit dem Translationsaktor 51 und/oder dem Rotationsaktor 52. Sofern das Lenkelement 22 beispielsweise ein Lenkrad 25 ist, wird regelmäßig der Rotationsaktor 52 zum Erzeugen der Stellbewegung des Lenkrads 25 Vorteile bieten. Der Translationsaktor 51 bietet Vorteile, sofern das Lenkelement translatorisch beweglich ist.

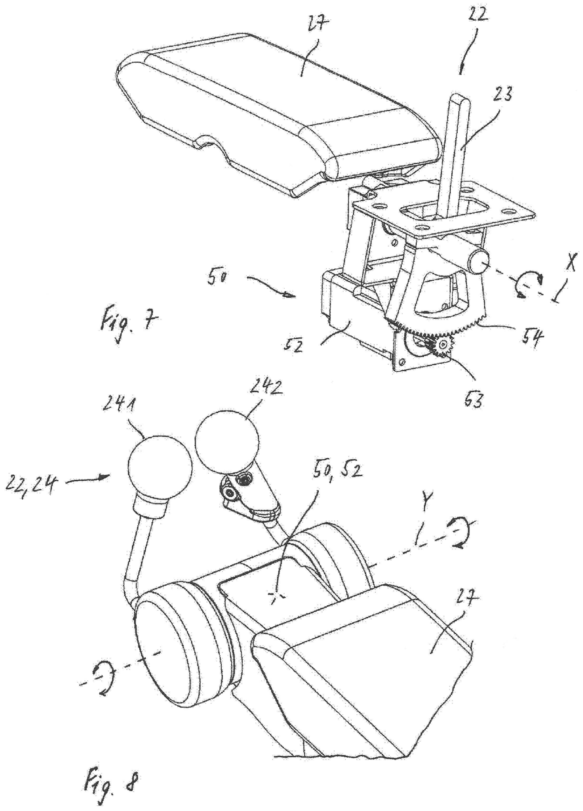

In den Fig. 7 und 8 sind spezifische Ausgestaltungen der Benutzerschnittstelle 21 im Bereich des Lenkelements 22 gezeigt.

Fig. 7 zeigt eine Ausgestaltung, bei der das Lenkelement 22 als Steuerhebel 23 ausgebildet ist.

Der Steuerhebel 23 ist um eine Rotationsachse X schwenkbeweglich. Die Rotationsachse X ist bei der gezeigten Ausführungsform parallel zu einer Längsachse des Pistenpflegefahrzeugs 1. In der gezeigten Konfiguration nimmt der Steuerhebel 23 die Null-Lenkstellung LS0 ein. Die Links- und Rechts-Lenkstellungen LS1, LS2 werden über eine entsprechende Schwenkbewegung um die Rotationsachse X eingenommen.

Zum automatischen Nachführen des Steuerhebels 23 ist die Stelleinrichtung 50 über eine Stirnverzahnung mit dem Steuerhebel 23 wirkverbunden. Die Stirnverzahnung weist ein Ritzel 53 und ein Stirnradsegment 54 auf. Das Ritzel 53 ist auf einer Abtriebswelle eines Rotationsaktors 52 angeordnet. Das Stirnradsegment 54 ist mit dem Ritzel 53 verzahnt, fest mit dem Steuerhebel 23 verbunden und gemeinsam mit dem Steuerhebel 23 um die Rotationsachse X drehbeweglich gelagert. Bei deaktiviertem Fahrerassistenzsystem 30 ist auch die Stelleinrichtung 50 deaktiviert. Der Fahrer B kann den Steuerhebel 23 dann manuell und ohne praktisch relevante Gegenkräfte und/oder Gegenmomenten um die Rotationsachse X verschwenken.

Bei der in Fig. 8 gezeigten spezifischen Ausgestaltung ist das Lenkelement 22 eine Doppelhebelanordnung 24 mit einem ersten Hebel 241 und einem zweiten Hebel 242.

Der erste Hebel 241 und der zweite Hebel 242 sind jeweils unabhängig voneinander um eine Rotationsachse Y schwenkbeweglich. Die Rotationsachse Y ist bei der gezeigten Ausführungsform parallel zu einer Querachse des Pistenpflegefahrzeugs 1. In aktiviertem Zustand des Fahrerassistenzsystems 30 wirkt die Stelleinrichtung 50 über einen/den Rotationsaktor 52 auf die Doppelhebelanordnung 24. Details der Wirkverbindung zwischen der Doppelhebelanordnung 24 und dem Rotationsaktor 52 sind in Fig. 8 nicht gezeigt.

Bei den spezifischen Ausgestaltungen nach den Fig. 7 und 8 weist die Benutzerschnittstelle im Übrigen eine Armlehne 27 auf, die als optional zu verstehen ist.

Wie bereits erläutert, ist die Sensoreinrichtung 40 bei unterschiedlichen Ausgestaltungen unterschiedlich zum Erfassen des automatisierten Lenkwinkels AW eingerichtet. In Fig. 9 sind unterschiedliche Varianten gezeigt.

Gemäß einer ersten Variante ist die Sensoreinrichtung 40 zum Erfassen von Drehzahlen D1, D2 betreffend die linke Kette 12 und die rechte Kette 13 eingerichtet. Die Drehzahlen D1, D2 können auch als erste Drehzahl D1 und zweite Drehzahl D2 bezeichnet werden. Die erste Drehzahl D1 ist der linken Kette 12 zugeordnet. Die zweite Drehzahl D2 ist der rechten Kette 13 zugeordnet. Die Sensoreinrichtung 40 weist zum Erfassen der ersten Drehzahl D1 einen ersten Drehzahlsensor 41 auf. Zum Erfassen der zweiten Drehzahl D2 weist die Sensoreinrichtung 40 einen zweiten Drehzahlsensor 42 auf.

Die Drehzahlen D1, D2 können an unterschiedlichen Stellen des Antriebssystems 10 erfasst werden. Dementsprechend können die Drehzahlsensoren 41, 42 an unterschiedlichen Bauteilen der linken Kette 12 und der rechten Kette 13 und/oder des Antriebssystems 10 angeordnet sein. Unterschiedliche Drehzahlen D1, D2 erlauben einen Rückschluss auf unterschiedliche Geschwindigkeiten V1, V2 und damit einen sich ergebenden (automatischen) Lenkwinkel AW. In der exemplarisch gezeigten Fahrsituation in Fig. 9 sind die Geschwindigkeiten V1, V2 der linken Kette 12 und der rechten Kette 13 identisch. Dementsprechend ergibt sich eine Geradeausfahrt und der automatische Lenkwinkel AW ist der Null-Lenkwinkel AW0.

Soll das Pistenpflegefahrzeug 1 eine Linkskurve (Fig. 4) oder eine Rechtskurve (Fig. 5) beschreiben, werden die linke Kette 12 und die rechte Kette 13 mit unterschiedlichen Geschwindigkeiten angesteuert. Zum Beschreiben der Linkskurve, wie in Fig. 4 gezeigt, ist die Geschwindigkeit V1' der linken Kette 12 kleiner als die Geschwindigkeit V2 der rechten Kette. Hierzu umgekehrt ist zum Beschreiben einer Rechtskurve die Geschwindigkeit V2' der rechten Kette kleiner als die Geschwindigkeit V1 der linken Kette.

Bei einer weiteren Variante gemäß Fig. 9 ist die Sensoreinrichtung 40 zum Erfassen von Hydraulikdrücken H1, H2 eingerichtet. Zu diesem Zweck weist die Sensoreinrichtung 40 einen ersten Drucksensor 43 und einen zweiten Drucksensor 44 auf. Der erste Drucksensor 43 dient dem Erfassen eines ersten Hydraulikdrucks H1, welcher der linken Kette 12 zugeordnet ist. Der zweite Drucksensor 44 dient dem Erfassen eines zweiten Hydraulikdrucks H2, welcher der rechten Kette V2 zugeordnet ist. Die Hydraulikdrücke H1, H2 können an unterschiedlichen Stellen des Antriebssystems 10 erfasst werden. Dementsprechend können die Drucksensoren 43, 44 an unterschiedlichen Stellen und/oder Bauteilen des Antriebssystems 10 angeordnet sein. Bei dieser Variante ist das Antriebssystem 10 ein hydraulisches Antriebssystem. Ist der erste Hydraulikdruck H1 größer als der zweite Hydraulikdruck, soll eine Rechtskurve beschrieben werden und umgekehrt. Durch einen Vergleich der Hydraulikdrücke H1, H2 kann der vorgegebene automatische Lenkwinkel AW ermittelt/erfasst werden.

Bei einer weiteren Variante gemäß Fig. 9 ist die Sensoreinrichtung 40 zum Erfassen elektrischer Ströme und/oder Spannungen C1, C2 eingerichtet und weist zu diesem Zweck einen ersten Strom- und/oder Spannungssensor 45 und einen zweiten Strom- und/oder Spannungssensor 46 auf. Unterschiedliche Ströme und/oder Spannungen C1, C2 bedeuten unterschiedliche Antriebsleistungen der linken Kette 12 oder der rechten Kette 13. Hierdurch kann auf die sich ergebenden Geschwindigkeiten V1, V2 und letztlich auf den vorgegebenen automatischen Lenkwinkel AW geschlossen werden. Bei dieser Variante ist das Antriebssystem 10 ein elektrisches Antriebssystem. Die Ströme und/oder Spannungen C1, C2 können beispielsweise an einem der linken Kette 12 zugeordneten elektrischen Antriebsmotor und einem der rechten Kette 13 zugeordneten elektrischen Antriebsmotor erfasst werden.

Bei einer weiteren Variante gemäß Fig. 9 ist die Sensoreinrichtung 40 zum Erfassen von Beschleunigungen G1, G2 eingerichtet und weist zu diesem Zweck einen ersten Beschleunigungssensor 47 und einen zweiten Beschleunigungssensor 48 auf. Es versteht sich, dass auch lediglich ein einziger Beschleunigungssensor oder mehr als die vorliegend gezeigten zwei Beschleunigungssensoren vorhanden sein können. Änderungen der Beschleunigungen G1, G2 entlang und/oder um die Raumachsen lassen einen Rückschluss auf eine Änderung der Richtung der Fahrbewegung F und damit auf den automatischen Lenkwinkel AW zu.

## Patentansprüche

1. Pistenpflegefahrzeug (1) zum Pflegen einer Schneepiste (P), aufweisend
ein Antriebssystem (10) mit einem Kettenfahrwerk (11), das zum Erzeugen einer Fahrbewegung (F) eingerichtet ist,
eine Fahrerkabine (20) mit einer Benutzerschnittstelle (21), die wenigstens ein Lenkelement (22) zum manuellen Lenken der Fahrbewegung (F) durch einen Fahrer (B) aufweist, wobei das Lenkelement (22) zwischen unterschiedlichen Lenkstellungen (LS0, LS1, LS2) manuell beweglich ist, die unterschiedliche Lenkwinkel (W0, W1, W2) der Fahrbewegung (F) erzeugen,
ein Fahrerassistenzsystem (30), das mit dem Antriebssystem (10) verbunden und zum automatischen Steuern der Fahrbewegung (F) entlang einer vorgegebenen Fahrspur eingerichtet ist,
eine Sensoreinrichtung (40), die zum Erfassen eines Lenkwinkels (AW0, AW1, AW2) der automatisch gesteuerten Fahrbewegung (F) eingerichtet ist, und
eine Stelleinrichtung (50), die mit dem Lenkelement (22) wirkverbunden und dazu eingerichtet ist, in Abhängigkeit des mittels der Sensoreinrichtung (40) erfassten Lenkwinkels (AW, AW1, AW2) der mittels des Fahrerassistenzsystems (30) automatisch gesteuerten Fahrbewegung (F) eine Bewegung des Lenkelements (22) in eine Lenkstellung der unterschiedlichen Lenkstellungen (LS0, LS1, LS2) zu erzeugen, die dem erfassten Lenkwinkel (AW0, AW1, AW2) der automatisch gesteuerten Fahrbewegung (F) entspricht.

2. Pistenpflegefahrzeug (1) nach Anspruch 1, wobei das Lenkelement (22) einen Steuerhebel (23), eine Doppelhebelanordnung (24), ein Lenkrad (25) und/oder einen Joystick (26) aufweist.

3. Pistenpflegefahrzeug (1) nach Anspruch 1 oder 2, wobei die Stelleinrichtung (50) einen Translationsaktor (51) aufweist, der zum Erzeugen der Bewegung des Lenkelements (22) eingerichtet ist, insbesondere wobei die Bewegung translatorisch ist.

4. Pistenpflegefahrzeug (1) nach einem der vorhergehenden Ansprüche, wobei die Stelleinrichtung (50) einen Rotationsaktor (52) aufweist, der zum Erzeugen der Bewegung des Lenkelements (22) eingerichtet ist, insbesondere wobei die Bewegung rotatorisch ist.

5. Pistenpflegefahrzeug (1) nach einem der vorhergehenden Ansprüche, wobei das Kettenfahrwerk (11) eine linke Kette (12) und eine rechte Kette (13) aufweist, und wobei die Sensoreinrichtung (40) eingerichtet ist zum Erfassen wenigstens einer ersten Messgröße (M1), die der linken Kette (12) zugeordnet ist, und einer zweiten Messgröße (M2), die rechten Kette (13) zugeordnet ist, und wobei der Lenkwinkel (AW0, AW1, AW2) der automatisch gesteuerten Fahrbewegung (F) mittelbar über einen Vergleich der ersten Messgröße (M1) und der zweiten Messgröße (M2) erfasst wird.

6. Pistenpflegefahrzeug (1) nach Anspruch 5, wobei die erste Messgröße (M1) und die zweite Messgröße (M2) Drehzahlen (D1, D2) sind, und wobei die Sensoreinrichtung (40) wenigstens einen ersten Drehzahlsensor (41), welcher der linken Kette (12) zugeordnet ist, und einen zweiten Drehzahlsensor (42) aufweist, welcher der rechten Kette (13) zugeordnet ist.

7. Pistenpflegefahrzeug (1) nach Anspruch 5 oder 6, wobei die erste Messgröße (M1) und die zweite Messgröße (M2) Hydraulikdrücke (H1, H2) sind, und wobei die Sensoreinrichtung (40) wenigstens einen ersten Drucksensor (43), welcher der linken Kette (12) zugeordnet ist, und einen zweiten Drucksensor (44) aufweist, welcher der rechten Kette (13) zugeordnet ist.

8. Pistenpflegefahrzeug (1) nach einem der Ansprüche 5 bis 7, wobei die erste Messgröße (M1) und die zweite Messgröße (M2) elektrische Ströme und/oder Spannungen (C1, C2) sind, und wobei die Sensoreinrichtung (40) wenigstens einen ersten Strom- und/oder Spannungssensor (45), welcher der linken Kette (12) zugeordnet ist, und einen zweiten Strom- und/oder Spannungssensor (46) aufweist, welcher der rechten Kette (13) zugeordnet ist.

9. Pistenpflegefahrzeug (1) nach einem der vorhergehenden Ansprüche, wobei die Sensoreinrichtung (40) zum Erfassen des Lenkwinkels (AW0, AW1, AW2) der automatisch gesteuerten Fahrbewegung (F) Beschleunigungssensoren (47, 48) aufweist, die zum Erfassen von Beschleunigungen (G1, G2) des Pistenpflegefahrzeugs (1) eingerichtet sind.

10. Pistenpflegefahrzeug (1) nach einem der vorhergehenden Ansprüche, wobei die Sensoreinrichtung (40) zum Erfassen von GPS-Signalen und zum Ermitteln des Lenkwinkels (AW0, AW1, AW2) der automatisch gesteuerten Fahrbewegung (F) in Abhängigkeit der erfassten GPS-Signale eingerichtet ist.
